# EUROPÄISCHE PATENTSCHRIFT

(11) **EP 2 874 717 B1**
(45) Veröffentlichungstag und Bekanntmachung des Hinweises auf die Patenterteilung: **28.09.2016**
(21) Anmeldenummer: 13730871.4
(22) Anmeldetag: 19.06.2013
(51) Int. Cl.: A63C 11/22, F16B 7/14

(54) **LÄNGENVERSTELLBARES ROHR, INSBESONDERE FÜR STÖCKE**
LENGTH ADJUSTABLE TUBE, IN PARTICULAR FOR STICKS
TUBE RÉGLABLE EN LONGUEUR, EN PARTICULIER POUR DES BÂTONS

(30) Priorität: 19.07.2012 CH 10962012
(43) Veröffentlichungstag der Anmeldung: 27.05.2015
(73) Patentinhaber: Lekisport AG, 6340 Baar (CH)
(72) Erfinder: HEIM, Eberhard, 72669 Unterensingen (DE)
(74) Vertreter: Bremi, Tobias Hans
(86) Internationale Anmeldenummer: PCT/EP2013/062692
(87) Internationale Veröffentlichungsnummer: WO 2014/012730

(56) Entgegenhaltungen:
- DE-A1- 4 205 445
- US-A- 6 027 087
- US-A1- 2010 040 406

## Beschreibung

### TECHNISCHES GEBIET

Die vorliegende Erfindung betrifft ein längenverstellbares Rohr, insbesondere für Stöcke, nach dem Oberbegriff des Anspruchs 1.

### STAND DER TECHNIK

Bei einem längenverstellbaren Rohr bekannt aus der DE 297 06 849 U1 ist das Spreizelement zum Innenrohr hin mit einem sich verjüngenden Innenkonus versehen, während das gegenläufige mit dem Aussenkonus versehene Innenelement zum Festklemmen der Spreizvorrichtung mit der Verstellschraube zum Innenrohr hin verstellt wird. Auf diese Weise ergibt sich zwar eine relativ parallele Klemmung über die gesamte axiale Länge des Spreizelementes, jedoch hat sich herausgestellt, dass bei stossartigen Belastungen von der Griffseite eines längenverstellbaren Stockes auf die Stockspitze eine axiale Verschiebung des Aussenrohres gegenüber dem Innenrohr nicht immer, insbesondere dann nicht vermieden werden kann, wenn bei der Verdrehbewegung zum Festklemmen keine ausreichend hohe Kraft aufgewendet worden ist.

Aus der DE 297 08 829 U1 ist darüber hinaus ein längenverstellbares Rohr bekannt, bei dem das mit dem Aussenkonus versehene Innenelement durch das vordere freie Ende der Verstellschraube gebildet und das mit dem Innenkonus versehene Spreizelement auf der Verstellschraube axial bewegt ist. Hierbei ist zwar der Innenkonus des Spreizelementes zum Innenrohr hin geöffnet, jedoch ergeben sich hier dieselben vorgenannten Nachteile, wenn das Spreizelement in gespreiztem Zustand axial festgelegt ist. Auch hier kann eine Relativbewegung zwischen Aussenrohr und Spreizelement erfolgen.

In gewissem Umfang werden die Probleme der oben genannten Spreizmechanismen gelöst durch die EP-A-1450906, welche eine Konstruktion zur Verfügung stellt, bei der der Innenkonus des Spreizelements derart verläuft, dass er sich zum Innenohr hin öffnet, und dass das Spreizelement zwischen einem inneren Anschlag am Innenrohr und einem äusseren Anschlag am freien Ende der Verstellschraube in geringen Grenzen axial bewegbar gehalten ist. So klemmt sich der Mechanismus bei Belastung unter Verwendung einer erstaunlich einfachen Konstruktion wie von selbst fest. Problematisch an dieser wie auch an den oben genannten Konstruktionen ist aber, dass bei einem zu starken Lösen des Mechanismus die Situation auftreten kann, dass, weil die Reibung des Spreizelements an der Innenwand des Aussenrohres nicht genügend ist, dieses beim Versuch, den Mechanismus festzuschrauben, mit der gesamten Spreizvorrichtung (inklusive Klemmkeil und Verstellschraube) beim Drehen des Innenrohres relativ zum Aussenrohr mit dreht und so der Mechanismus nicht fest gedreht werden kann. Nur ein mühsames fast vollständiges Auseinanderziehen der beiden Rohre, leichtes Festziehen des Mechanismus und anschliessendes Wiederineinanderschieben der Rohre kann dieses Problem lösen.
Hier soll die Erfindung Abhilfe schaffen.

Dokument US 2010/0040406 beschreibt ein Rohr gemäß dem Oberbegriff von Anspruch 1. Dokumente DE 42 05 445 und US 6 027 087 beschreiben längenverstellbare Röhren, mit Klemmabschnitten, welche Nasen aufweisen, die auch im entspannten Zustand elastisch gegen eine Kontaktfläche drücken.

### DARSTELLUNG DER ERFINDUNG

Es ist entsprechend unter anderem Aufgabe der vorliegenden Erfindung, eine verbesserte Spreizvorrichtung für längenverstellbare Rohre, insbesondere für Stöcke wie Skistöcke, Trekkingstöcke, Langlaufstöcke, Nordic-Walking-Stöcke, mit zumindest einem Aussenrohr und einem zur Einstellung der Rohrlänge in das Aussenrohr teleskopisch einschiebbaren Innenrohr zur Verfügung zu stellen. Dabei gibt es vorzugsweise bei einer solchen Konstruktion eine am Einschubende des Innenrohrs gehaltene Spreizvorrichtung, mit der das Innenrohr im Aussenrohr axial festklemmbar ist (Kraftschluss mit Reibung zwischen Spreizelement und Innenwand des Aussenrohres) und die ein radial auseinanderdrückbares und mit einem Innenkonus versehenes, Spreizelement und ein mit einem gegenläufigen Aussenkonus versehenes und im Spreizelement axial verschiebbar aufgenommenes Innenelement und eine axial gerichtete, am Innenrohr drehfest gehaltene Verstellschaube, die mit einer Innengewindebohrung im Innenelement in Wirkverbindung ist, aufweist. Dabei verfügt das Spreizelement über eine gewindefreie Durchgangsöffnung, durch welche die Verstellschaube hindurchtritt. Mit anderen Worten gibt es keine direkte Wechselwirkung zwischen der Verstellschraube und dem Spreizelement, letzteres kann im Rahmen eines definierten axialen Spiels auf der Verstellschraube in axialer Richtung ohne Drehung des Spreizelements verschoben werden.

Eine solche Konstruktion ist nun insbesondere bevorzugt dadurch gekennzeichnet, dass am oder im Spreizelement ein Klemmabschnitt angeordnet ist, welcher in radialer Richtung wenigstens im Bereich einer Kontaktfläche im entspannten Zustand über einen grösseren Radius verfügt als der Radius des Spreizelements in dessen durch die Wechselwirkung mit dem Innenelement verursachten Spreizbereich. Der Spreizbereich ist dabei jener Bereich des Spreizelements, der nicht nur aufgespreizt wird, sondern der dabei auch mit seiner Aussenfläche in Kontakt mit der Innenfläche des Aussenrohrs kommt und entsprechend die eigentliche axiale Feststellwirkung zwischen den beiden Rohren gewährleistet. Zudem ist dieser Klemmabschnitt wenigstens im Bereich der Kontaktfläche elastisch gegen eine Rückstellkraft zur Achse des Spreizelements hin wenigstens bis zum Radius des Spreizelements nach innen versetzbar oder verschiebbar.

Der Radius des Klemmabschnitts im entspannten Zustand wird dabei so gewählt, dass er gerade etwas grösser ist als der Innenradius des Aussenrohres. Dies führt dazu, dass unabhängig vom Klemmzustand der Spreizvorrichtung, das heisst unabhängig davon, in welcher axialen Position das Innenelement relativ zum Spreizelement liegt, stets dieser Klemmabschnitt im Anschlag mit der Innenwand des Aussenrohres liegt. Es gibt also immer und unabhängig vom Klemmzustand der Spreizvorrichtung einen Kontakt zwischen dem Klemmabschnitt und der Innenwand, dies führt dazu, dass durch diesen Kontakt eine genügende Reibung vorhanden ist, dass, wenn das Innenohr relativ zum Aussenrohr gedreht wird, das Spreizelement bezüglich Aussenrohr rotationsmässig fixiert ist und also nicht einfach die gesamte Spreizvorrichtung mit drehen kann und sich nicht festziehen lassen kann. Diese an sich einfache konstruktive Massnahme hat eine hervorragende Wirkung, denn sie führt dazu, dass genau die oben genannten Probleme, namentlich dass bei einem zu starken Lösen der Vorrichtung diese nicht mehr ohne mühsame Manipulationen wieder festgestellt werden kann, völlig gelöst sind.

Erfindungsgemäß verfügt das Spreizelement in seinem dem Innenrohr zugewandten axialen Bereich über einen zylindrischen Abschnitt, der durch das Innenelement wenig aufgespreizt wird oder sogar im Wesentlichen nicht aufgespreizt wird, und dass der Klemmabschnitt in diesem zylindrischen Abschnitt angeordnet ist. In diesem Bereich des zylindrischen Abschnitts kann das Spreizelement ebenfalls in gewissem Masse aufgespreizt werden (insbesondere wenn es einen über die ganze Länge des Spreizelements verlaufenden axialen Spalt gibt), jedoch trägt diese Spreizung aufgrund des geringeren Aussendurchmessers in diesem Bereich in der Regel nicht oder nur unwesentlich zur Klemmwirkung bei. Selbstverständlich kann der Klemmabschnitt auch im Spreizbereich, d.h. in jenem Bereich angeordnet sein, wo auch durch die Wechselwirkung mit dem Innenelement das Aussenelement gegen die Innenwand des Aussenrohrs klemmend ausgeweitet wird, es erweist sich aber als konstruktiv einfach und hinsichtlich der Wirkungsweise verlässlicher, wenn der Klemmabschnitt in einem solchen mit der eigentlichen axialen Klemmwirkung der Vorrichtung nicht im direkten Zusammenhang stehenden axialen Bereich angeordnet wird.

Vorzugsweise bildet dieser zylindrische Abschnitt jenen Bereich der Spreizhülse, der dem Innenrohr zugewandt ist, und der eigentliche Spreizabschnitt (das heisst jener Bereich, in welchem das Spreizelement durch das Innenelement aufgespreizt und gegen die Innenwand des Aussenrohres gepresst wird, wenn der Mechanismus festgezogen wird) jenen Bereich, der auf der Seite des freien Endes der Verstellschraube liegt. Der zylindrische Abschnitt ist bevorzugt ebenfalls zylindrisch ausgebildet wie der Spreizabschnitt, verfügt aber über einen geringeren Aussen-Durchmesser als der Spreizabschnitt. Mit anderen Worten gibt es auf der Aussenkontur eine bevorzugt umlaufende Stufe in Form einer Verjüngung zwischen dem Spreizabschnitt und diesem zylindrischen Abschnitt. Diese Verjüngung ist bevorzugt je nach Aussendurchmesser des Spreizelements unterschiedlich ausgeprägt. Bei einem Aussendurchmesser des Spreizelements von 15 mm (jeweils Aussendurchmesser im Klemmabschnitt, entspricht Innendurchmesser des Aussenrohres) ist beispielsweise diese Stufe 0.5-1.5 mm (Differenz im Radius) auf jeder Seite, bei einem Aussendurchmesser von 14 mm des Spreizelements ist die Stufe 0.2-1 mm (Differenz im Radius) auf jeder Seite, und bei einem Aussendurchmesser des Spreizelements von 12 mm nur sehr gering wie beispielsweise 0.1-0.5 mm (Differenz im Radius).

Der zylindrische Abschnitt ist bevorzugtermassen in axialer Richtung weniger lang als der Spreizabschnitt. Typischerweise ist die Länge des zylindrischen Abschnitts höchstens gleich lang wie der Spreizabschnitt, vorzugsweise aber einen viertel bis halb so lang wie der Spreizabschnitt. Mit anderen Worten ist bevorzugtermassen das Spreizelement so ausgestaltet, dass es auf seiner dem Innenrohr zugewandten Seite zunächst durch den zylindrischen Abschnitt gebildet wird, auf die gesamte Länge des Spreizelement bezogen über eine axiale Länge von 10-50 %, vorzugsweise über eine axiale Länge im Bereich von 20-30 % der Gesamtlänge des Spreizelements, und anschliessend folgt der Spreizabschnitt über die restliche Länge der Gesamtlänge des Spreizelements, der Spreizabschnitt bildet mit anderen Worten auch den oberen Abschluss des Spreizelements.

Besonders einfach und konstruktiv zuverlässig lässt sich eine solche Konstruktion realisieren, indem erfindungsgemäß der Klemmabschnitt in Form wenigstens einer, durch zwei axial verlaufende Schlitze vom zylindrischen Abschnitt abgetrennt ausgebildeten Lasche ausgestaltet ist, welche wenigstens einseitig über einen als elastisches Bindeglied zum zylindrischen Abschnitt wirkenden Arm mit den zylindrischen Abschnitt verbunden ist. Ganz besonders bevorzugt ist es dann, wenn es einen solchen Arm nur einseitig gibt, das heisst, dass die Lasche ein freies, dem Innenohr zugewandtes Ende aufweist, und in diesem Bereich vorzugsweise eine radial nach aussen gerichtete, vorzugsweise angepasst an die Innenfläche des Aussenrohres konisch verlaufende Kontaktfläche zur Verfügung stellt. Der Arm wirkt dann gewissermassen als elastisches Federglied.

Am Spreizelement sind bevorzugtermassen wenigstens zwei Klemmabschnitte insbesondere bevorzugt im oben genannten zylindrischen Abschnitt des Spreizelements, angeordnet, vorzugsweise in gegenüberliegender Weise respektive bei mehr als zwei in gleichmässig um den Umfang verteilter Weise. Besonders bevorzugt gibt es zwei gegenüberliegende Klemmabschnitte in diesem zylindrischen Bereich, so dass eine möglichst symmetrische Verspannung im Aussenrohr gewährleistet ist.

Typischerweise erweist es sich insbesondere im Zusammenhang mit der Ausbildung des Spreizelements aus Kunststoff wie beispielsweise Polyäthylen, Polyamid, Polycarbonat, oder ähnliche, in gegebenenfalls faserverstärktes Ausbildung als genügend, wenn der grössere Radius des Klemmabschnitts wenigstens 1 %, vorzugsweise wenigstens 2 %, insbesondere bevorzugt im Bereich von 3-8 % grösser ist als der Radius des Spreizelements im entspannten Zustand. Das Mass für diesen Überstand hängt einerseits von der Toleranz des Innendurchmessers ab, andererseits aber auch von der Stärke der durch den Klemmabschnitt zur Verfügung gestellten elastischen Rückstellkraft. Letztere wird beispielsweise bei einer einstückigen Ausbildung mit dem gesamten Spreizelement durch die Dicke und Breite des Armes sowie die Wahl des eingesetzten Materials bestimmt. Die Klemmung durch diese elastische Wirkung des Klemmabschnitts muss gerade so gross sein, dass im gelösten Zustand das Spreizelement an einem Mitdrehen mit dem Innenohr gehindert werden kann, darf aber nicht so gross sein, dass sie im gelösten Zustand das axiale Verschieben der beiden Rohre relativ zueinander behindert. Bevorzugtermassen wird, wie bereits weiter oben erwähnt, der Klemmabschnitt einstückig mit dem Spreizelement ausgebildet, dies ist besonders einfach, weil in einem einzigen Spritzgussvorgang aus einem Kunststoffmaterial das Spreizelement ausgebildet werden kann und gewissermassen auf bestehende Klemmkeile aufgesetzt werden kann (Repowering/Upgrading).

Als weitere Verbesserung der Probleme bei einem vollständigen Lösen der Spreizvorrichtung ist es möglich, dass an der der Spreizvorrichtung zugewandten Anschlagsfläche des Innenrohres und/oder am Innenelement an deren dem Innenohr zugewandten Anschlagsfläche ein sich jeweils in axialer Richtung erstreckender Vorsprung angeordnet ist. Es ist nämlich so, dass, wenn das Innenelement zu stark zum Innenohr hin gedreht wird, was insbesondere dann möglich ist, wenn das Spreizelement besonders gut bezüglich Aussenrohr durch die genannten Klemmabschnitte fixiert ist, das Innenelement durch flächige Anlage am Anschlag am Innenohr relativ zu diesem verklemmt und nicht mehr ohne vollständige Demontage des Klemmmechanismus gelöst werden kann. Dies kann durch diese Vorsprünge, die entweder am Innenelement oder am Innenohr, oder bevorzugtermassen an beiden Elementen, angeordnet sind, weitgehend vermieden werden, da es dann nicht mehr zu einer flächigen Anlage mit einer grossen Reibung kommt, sondern nur noch zu einer punktuellen Anlage.

Eine besonders bevorzugte Bauweise von solchen Vorsprüngen ist dadurch gekennzeichnet, dass der jeweilige Vorsprung in Form einer sich in Umfangsrichtung sukzessive geschwungen oder linear oder auch gestuft aufbauenden Rampe, die bevorzugtermassen in einer axialen Anschlagsfläche (Stufe, Ebene parallel zur Achse) endet, ausgebildet ist. Eine solche Rampe verfügt typischerweise bevorzugtermassen über eine axiale Höhe im Bereich von 0.1-3 mm, vorzugsweise im Bereich von 0.2-1 mm. Ganz besonders bevorzugt ist es, wenn sowohl am Innenrohr als auch am Innenelement solche Vorsprünge angeordnet sind, und diese derartig relativ zueinander gegenläufig ausgebildet sind, dass die beiden axialen Anschlagsflächen bei einem Herunterdrehen des Innenelements zum Innenohr in flächige Anschlagslage gebracht werden können.

Eine weitere bevorzugte Ausführungsform ist dadurch gekennzeichnet, dass der Innenkonus des Spreizelementes derart verläuft, dass er sich zum Innenrohr hin öffnet, und dass das Spreizelement zwischen einem inneren Anschlag am Innenrohr und einem äusseren Anschlag, vorzugsweise am freien Ende der Verstellschraube in geringen Grenzen axial bewegbar gehalten ist, wobei dieses axiale Spiel vorzugsweise im Bereich von 0.1-5 mm, insbesondere vorzugsweise im Bereich von 0.25-2.5 mm liegt.

Das Spreizelement kann dabei topfartig ausgebildet sein und der Topfboden von dem dem Innenrohr abgewandten freien Endbereich der Verstellschraube durch die gewindefreie Durchgangsöffnung hindurch durchdrungen sein, wobei vorzugsweise der äussere Anschlag von einer auf das freie Ende der Verstellschraube nach dem Aufsetzen des Spreizelements aufgesetzten und axial befestigten Kappe oder einem dort angeordneten Schraubenkopf gebildet sein kann.

Das Spreizelement kann zudem an einem Umfangsbereich mit einem über die gesamte axiale Länge verlaufenden Schlitz versehen sein, sowie vorzugsweise zusätzlich mit einem umfangsmässig gegenüberliegenden im wesentlichen bis auf einen zylindrischen, dem Innenohr zugewandten Abschnitt des Spreizelement durch dieses verlaufenden Schlitz versehen ist, wobei bevorzugtermassen das mit dem Aussenkonus versehene Innenelement einen oder mehr radiale, ebenfalls axial erstreckende Flügel aufweist, der bzw. die in axialen Schlitzen des Spreizelementes geführt sind.

Die Spreizvorrichtung kann des Weiteren einen die Verstellschraube axial und drehfest aufnehmenden Stopfen aufweisen, der im Innenrohr axial und drehfest, vorzugsweise bis auf einen umlaufenden Flansch gehalten ist und der den inneren Anschlag bildet.

Zu guter letzt betrifft die vorliegende Erfindung einen Skistock, Trekkingstock, Langlaufstock, oder Nordic-Walking Stock mit einem längenverstellbaren Rohr wie oben beschrieben, wobei gegebenenfalls auch mehr als nur ein Verstellbereich vorgesehen sein kann, und weitere Verstellbereiche entweder mit einem Spreizvorrichtung wie oben beschrieben realisiert sein können oder mit einer anderen, gegebenenfalls auch aussen liegenden Klemmvorrichtung, und wobei am obersten aussen Rohr ein Griff angeordnet ist und am untersten Innenohr eine Stockspitze.

Weitere Ausführungsformen sind in den abhängigen Ansprüchen angegeben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:

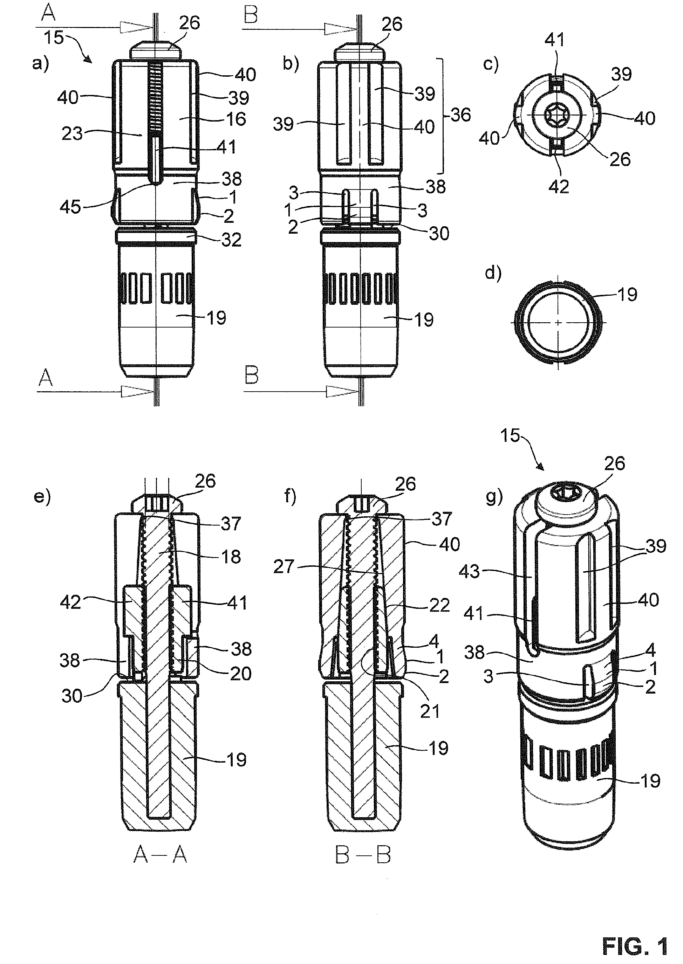

- Fig. 1: die Spreizvorrichtung ohne Innenohr und Aussenrohr in unterschiedlichen Ansichten, wobei in a) eine erste seitliche Ansicht, und in b) eine um 90° gedrehte seitliche Ansicht dargestellt ist, in c) eine Aufsicht von oben, in d) eine Sicht von unten, in e) ein axialer Schnitt gemäss A-A in Figur a), in f) ein axialer Schnitt gemäss B-B in Figur b) und in g) eine perspektivische Ansicht;

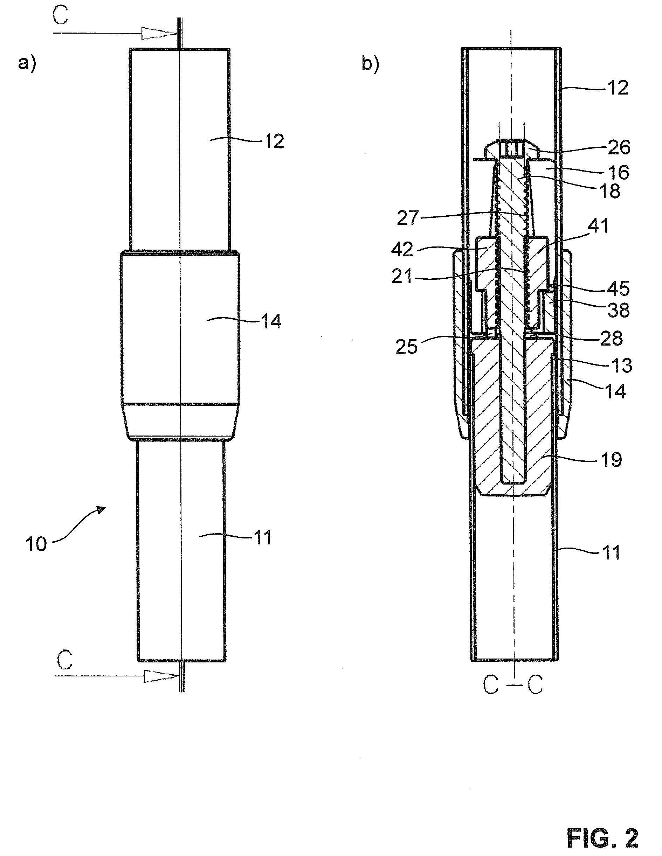

- Fig. 2: ein Rohrabschnitt mit Spreizvorrichtung beim Übergang vom Innenohr zum Aussenrohr, wobei in a) eine seitliche Aussenansicht und in b) der Schnitt gemäss C-C in a) dargestellt ist;

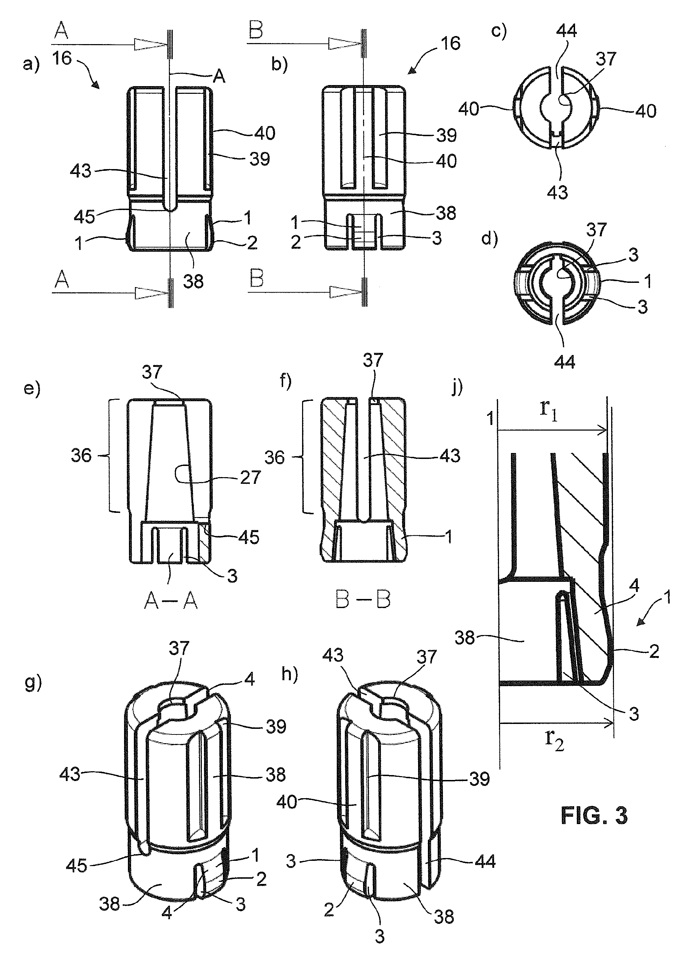

- Fig. 3: das Spreizelement alleine in unterschiedlichen Ansichten, wobei in a) eine erste seitliche Ansicht, und in b) eine um 90° gedrehte seitliche Ansicht dargestellt ist, in c) eine Aufsicht von oben, in d) eine Sicht von unten, in e) ein axialer Schnitt gemäss A-A in Figur a), in f) ein axialer Schnitt gemäss B-B in Figur b), und in g) und h) zwei um 90° gedrehte perspektivische Ansichten dargestellt sind;

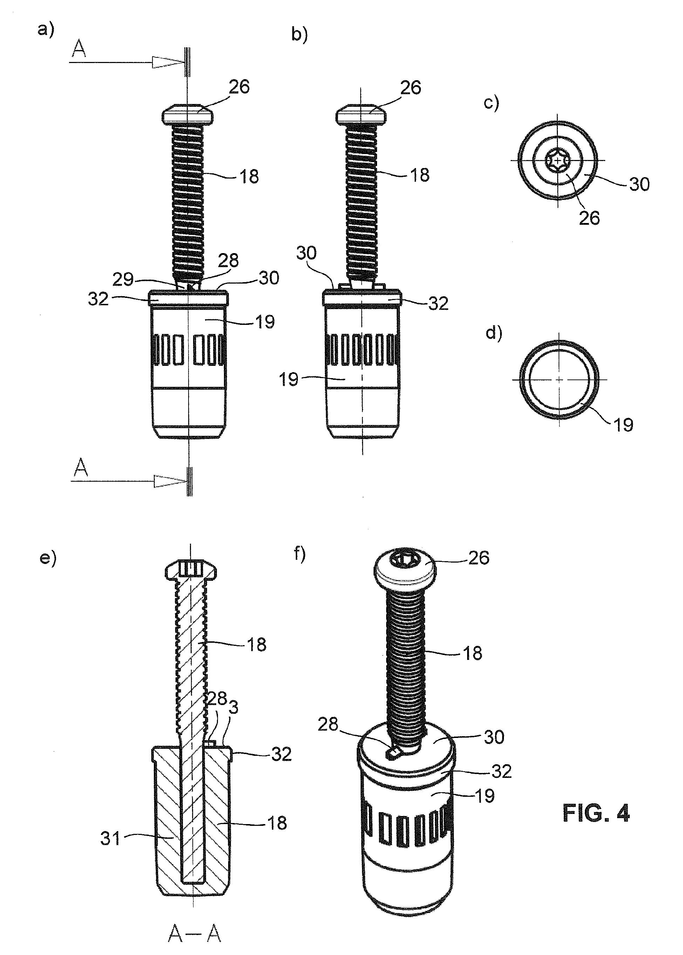

- Fig. 4: der Endstopfen mit der lagefixierten Verstellschraube ohne aufgesetzten Klemmkeil und Spreizelement in unterschiedlichen Ansichten, wobei in a) eine erste seitliche Ansicht, und in b) eine um 90° gedrehte seitliche Ansicht dargestellt ist, in c) eine Aufsicht von oben, in d) eine Sicht von unten, in e) ein axialer Schnitt gemäss A-A in Figur a), und in f) eine perspektivische Ansicht;

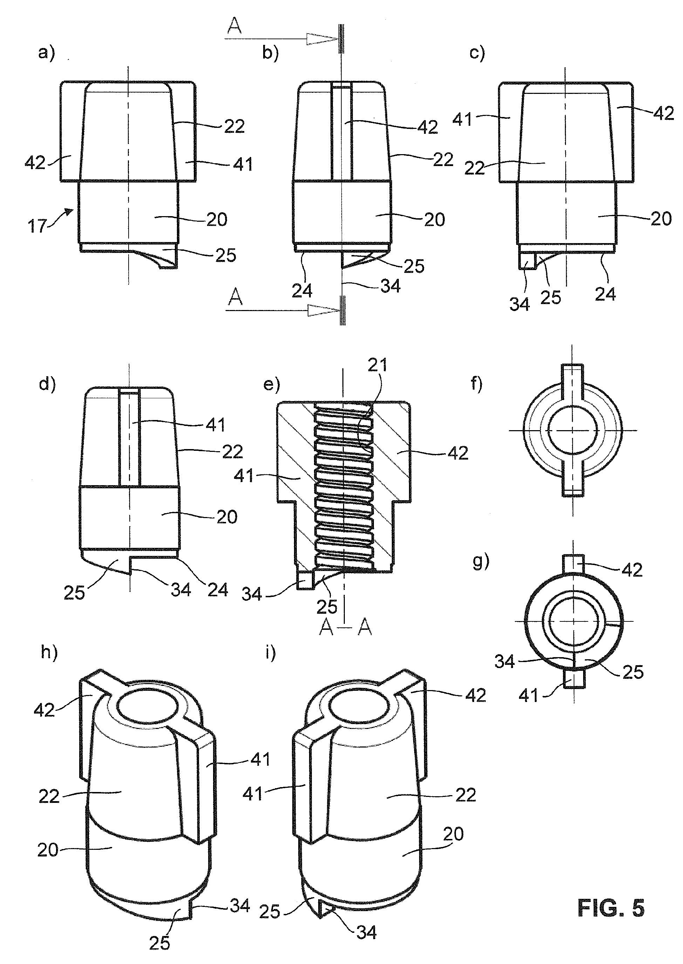

- Fig. 5: der Klemmkeil alleine in unterschiedlichen Ansichten, wobei in a) eine erste seitliche Ansicht, in b) eine um 90° gedrehte seitliche Ansicht, in c) um weitere 90° gedrehte seitliche Ansicht und in d) eine nochmals um weitere 90° gedrehte seitliche Ansicht dargestellt ist, in e) ein axialer Schnitt gemäss A-A in Figur b), in f) eine Aufsicht von oben, in g) eine Sicht von unten, in h) und i) zwei um 90° gedrehte perspektivische Ansichten dargestellt sind (die Darstellungen in den Figuren 1-4 sind vergrössert aber relativ zueinander massstäblich soweit keine perspektivischen Darstellungen gewählt sind, und die Darstellung in Figur 5 im Vergleich zu den Figuren 1-4 zur besseren Illustration im dazu vergrössernden Massstab 2:1 gegeben ist); und

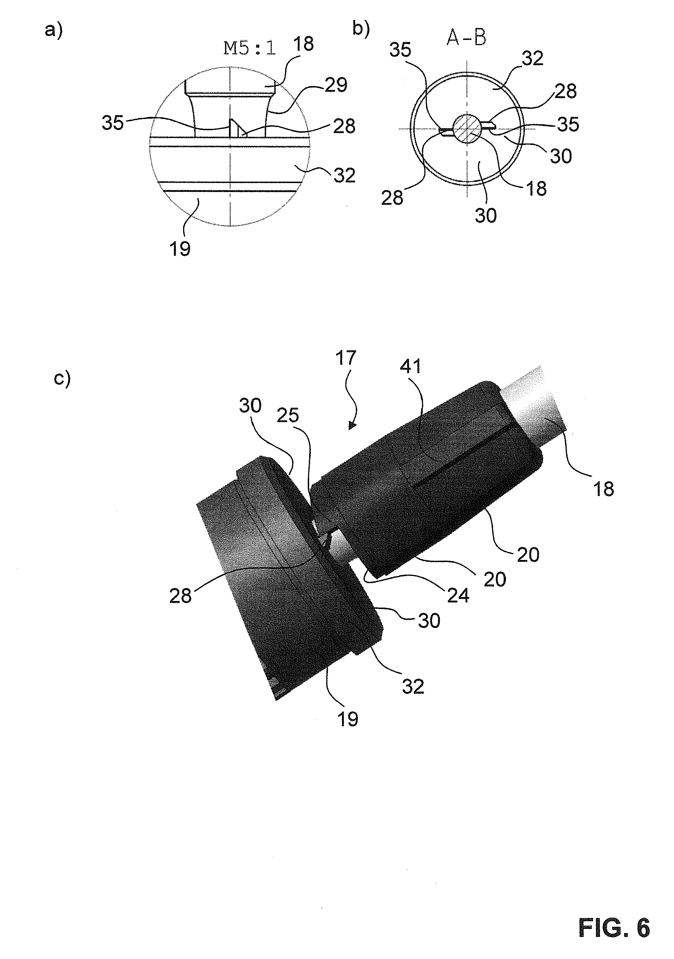

- Fig. 6: Detailansichten des Fussbereichs der Verstellschraube in a) in einer seitlichen Ansicht in einem vergrösserten Ausschnitt entsprechend Figur 4 a) und in einer durch den Fussbereich der Verstellschraube geschnittenen Aufsicht in b), sowie eine perspektivische Ansicht des Klemmkeils in der Anschlagsituation der beiden Rampen auf dem Kragen respektive dem Klemmkeil.

### BESCHREIBUNG BEVORZUGTER AUSFÜHRUNGSFORMEN

In den an Folgen diskutierten Figuren 1-5 ist ein Ausführungsbeispiel eines Klemmmechanismus nach der Erfindung dargestellt, wobei in Figur 1 der Klemmmechanismus ohne Rohre zur besseren Illustration dargestellt ist, in Figur 2 der Klemmmechanismus mit Aussenrohr und Innenrohr, in Figur 3 nur das Spreizelement, in Figur 4 nur der Endstopfen mit der Verstellschraube und in Figur 5 nur das Innenelement respektive der Klemmkeil. In Figur 6 sind Details des Mechanismus zu dessen Erklärung dargestellt. In den unterschiedlichen Figuren angegebene Bezugszeichen bezeichnen dabei jeweils die gleichen strukturellen Merkmale.

Bei den in den Figuren, insbesondere in Figur 2 dargestellten Verbindungsabschnitten eines längenverstellbaren Rohres 10 ist ein Innenrohr 11 in einem Aussenrohr 12 teleskopartig geführt. Hierzu ist das Innenrohr 11 an seinem dem Aussenrohr 12 zugewandten Ende 13 mit einer Spreizvorrichtung 15 versehen, mittels welcher das Innenrohr 11 im Aussenrohr 12 an beliebigen Position klemmend festlegbar ist. Das Aussenrohr 12 besitzt an seinem dem Innenohr 11 zugewandten Ende eine umlaufende Kunststoffmanschette 14, in welche das Aussenrohr 12 eingepresst und/oder eingeklebt ist. Diese optionale Manschette trägt zu einer besseren Führung des Innenrohres bei (tatsächlich umgreift die Manschette 14 auch das Innenohr im über das Aussenrohr hinausstehenden Bereich über den ganzen Umfang), sie führt zu einer verbesserten Handhabbarkeit und verhindert das Verklemmen zum Beispiel von Haut zwischen den beiden Rohrabschnitten beim Verstellvorgang, und sie reduziert generell das Verletzungsrisiko an den scharfen Kanten der eingesetzten Aluminiumrohre. Eine solche Manschette ist typischerweise aus Kunststoff, beispielsweise Polyäthylen, Polycarbonat, Polyamid oder Mischungen respektive Zweikomponentenbauweisen davon. Die Manschette kann aber auch, unter anderem auch aus ästhetischen Gründen, aus Metall bestehen.

Die Spreizvorrichtung 15 besitzt ein Aussenelement in Form eines Spreizelementes 16, ein Innenelement 17, auch als Klemmkeil bezeichnet, und eine Verstellschraube bzw. Aussengewindestange 18, die typischerweise aus Metall besteht, sie kann aber auch aus Kunststoff gefertigt sein.

Die in axialer Richtung des Rohres 10 angeordnete Aussengewindestange 18 ist mit ihrem einen Endbereich am Einschubende 13 des Innenrohrs 11 drehfest gehalten. Hierzu ist die Aussengewindestange 18 in einen Endstopfen 19 eingesteckt, eingeschraubt oder an diesem einstückig angeformt oder dgl. und in diesem durch Kleben oder dgl. axial festgelegt und drehfest gehalten. Der Endstopfen 19 ist im Innenrohr 11 ebenfalls axial festgelegt und drehfest gehalten. Typischerweise verfügt der Endstopfen 19 über einen Einsteckbereich, der vollständig im Innenrohr 11 liegt, sowie über einen umlaufenden Flansch, dessen Aussendurchmesser dem Aussendurchmesser des Innenrohres 11 entspricht, und der als Anschlag für das Innenrohr 11 dient, wenn dieses auf den Endstopfen 19 aufgeschoben und mit diesem entweder durch Kraftschluss und/oder Stoffschluss und/oder Formschluss fest verbunden wird.

Auf die Aussengewindestange 18 ist das Innenelement 17 mit seinem axialen zentrischen Innengewinde 21 aufgeschraubt. Das Innenelement 17 ist aussenseitig mit einem Konus 22 versehen bzw. kegelförmig ausgebildet.

Der Aussenkonus 22 verjüngt sich zum freien Ende der Aussengewindestange 18 hin. Die Aussengewindestange 18 durchdringt die Innengewindebohrung 21 des Innenelements 17 und ist an ihrem herausragendem freien Ende mit einem äusseren Anschlag 26 drehfest verbunden. Der äussere Anschlag 26 wird typischerweise durch einen Schraubenkopf 26 gebildet. Wird nämlich das Spreizelement mit einem durchlaufenden Schlitz ausgebildet, so lässt sich eine solche Vorrichtung einfach zusammenbauen, indem unter Verwendung einer Verstellschraube 18 mit einem Schraubenkopf 26 in einem ersten Schritt das Innenelement 17 auf die Schraube 18 aufgeschraubt wird, dann die Verstellschraube 18 in den Endstopfen eingeschraubt wird, und anschliessend das Spreizelement unter Aufweitung über den durchgehenden Schlitz 44 seitlich aufgestülpt wird.

Das aussenseitige Spreizelement 16 besitzt an seinem spreizbaren Hauptkörper 23 im Bereich 36 einen Innenkonus bzw. Innenkegel 27, dessen Steilheit derjenigen des Aussenkonus bzw. -kegels 22 des Innenelements 17 entspricht. Gemäss der zeichnerischen Darstellung ist das Innenelement 17 in dem gegengerichteten Spreizelement 16 im wesentlichen spielfrei aufgenommen, wobei der Aussenkonus 22 des Klemmkeils kürzer ist als der Innenkonus 27 des Spreizelement. Entsprechend der dargestellten Anordnung öffnet sich der Innenkonus bzw. Innenkegel 27 des Spreizelementes 16 zum Innenrohr 11 hin. Beispielsweise kann das Spreizelement 16 aus einem Kunststoff und das Innenelement 17 aus einem Metall oder Kunststoff sein.

Wie insbesondere aus Figur 3, welche das Spreizelement 16 darstellt, ersichtlich ist, verfügt dieses über einen eigentlichen Spreizbereich 36, das heisst den Bereich des spreizbaren Hauptkörpers 23, wo im Inneren der konisch zulaufende Bereich 27 angeordnet ist und durch die Wechselwirkung mit dem Innenelement 17 die eigentliche Aufspreizung bei einem Eindringen des Innenelement in das Aussenelement 16 erfolgt. Unterhalb, das heisst im Richtung Innenrohr 11 anschliessenden Bereich, verfügt das Spreizelement über einen zylindrischen Bereich 38, der im Gegensatz zum Bereich 36 auch im Klemmzustand nicht mit der Innenwand des Aussenrohres 12 in Kontakt kommt. In diesem Bereich 38 gibt es nun einen Klemmabschnitt 1, der in Form einer zum Innenrohr 11 gerichteten elastischen Zunge mit freiem Ende ausgebildet ist. Dieser Abschnitt 1 wird gewissermassen aus dem Bereich 38 durch zwei um den Umfang versetzte axial verlaufende Schlitze 3 gebildet, die den axialen Bereich 38 von der dem Innenrohr zugewandten Seite her teilweise, vorzugsweise ungefähr um 2/3-3/4 durchtreten. So bildet sich ein Klemmabschnitt 1 der, da er einstückig mit dem Rest des Spreizelement 16 ausgebildet ist, im Sinne eines Federelements oder einer Blattfeder ausgebildet ist. Da beim Spritzgussverfahren dieses Element 1 mit seinem freien Ende radial nach aussen hervortretende ausgebildet ist, bildet sich im Bereich des freien Endes eine Kontaktzone 2. In dieser Kontaktzone 2 tritt das Klemmelement 1 mit der Innenwand des Aussenrohres 12 in Kontakt, und zwar infolge der Tatsache, dass der Radius r2 (im entspannten Zustand) grösser ist als der Radius r1 im Klemmbereich 36 des Spreizelements (im entspannten Zustand) und auch gerade etwas grösser als der Innendurchmesser des Aussenrohres 12 unabhängig vom Klemmzustand des Mechanismus. Um eine möglichst gute Klemmwirkung im Bereich 2 zu gewährleisten ist dieser mit der gleichen umlaufenden Krümmung ausgebildet wie die Innenkrümmung des Aussenrohres 12. In axialer Richtung kann der Kontaktbereich 2 entweder gerade ausgebildet sein oder leicht konkav, um auf unterschiedliche Innenradien der Aussenrohre zu reagieren.

Dabei gibt es zwei, um den Umlauf betrachtet, gegenüberliegende solche Klemmabschnitte 1, so dass eine symmetrische Klemmung gewährleistet ist.

Der einstückige Endstopfen 19, ist mit einem im Innenrohr 11 dreh-und verschiebefest gehaltenen Innenteil 31 und mit einem Bund oder umlaufenden Flansch 32 versehen, der auf der Ringstirn des Innenrohrs 11 aufliegt.

Das Spreizelement 16 ist etwa topfförmig, wobei der Topfboden 36 eine Durchgangsöffnung 37 besitzt, die vom freien Endbereich der Verstellschraube 18 durchdrungen ist, und kein Gewinde aufweist. Der Topfboden 36 ist relativ zur Verstellschraube 18 axial ohne Rotation beweglich. Der Hauptkörper 23 des Spreizelementes 16, der aussenumfangsseitig mit einem oder mehreren Reibbelägen versehen, beschichtet oder dgl. oder durch seine Oberflächengestaltung (beispielsweise Längsrippen 40 und parallele danebenliegende Vertiefungen 39) so ausgebildet sein kann, um eine erhöhte Reibkraft gegenüber dem Innenumfang des Aussenrohrs 12 zu erreichen, besitzt an seinem dem Topfboden 36 abgewandten und dem Innenrohr 11 zugewandten Ende einen aussendurchmesserkleineren zylindrischen Ansatz 38, der oben bereits diskutiert wurde. Das Spreizelement 16 befindet sich somit vorzugsweise in geringen Grenzen axial beweglich zwischen dem äusseren Anschlag 26 am freien Ende der Verstellschraube 18 und einer inneren Anschlagfläche 28. Der Abstand der beiden Anschlagflächen 24 und 28 ist etwas grösser als die axiale Länge des Spreizelementes 16 zwischen der Aussenfläche des Topfbodens 36 und der Ringstirn des zylindrischen Ansatzes 38.

Alternativ kann der äussere Anschlag aber auch beispielsweise durch einen spezifisch dafür vorgesehenen umlaufenden Flansch an der Verstellschraube und eine entsprechende Rippe am Spreizelement zur Verfügung gestellt das gleiche gilt für den inneren Anschlag, dieser muss nicht notwendigerweise am Endstopfen 19 liegen. Wichtig für eine solche Ausführungsform ist, dass das Spreizelement 16 beim Vorgang des Feststellens Richtung freies Ende der Verstellschraube an einen Anschlag verschoben wird, und dass nach Erreichen dieser Position das Spreizelement zum Innenrohr hin ein gewisses wohldefiniertes Spiel aufweist, so dass bei einer Belastung, d.h. einem relativen Verschieben der beiden Rohre aufeinander zu, das Spreizelement noch weiter auf das Innenelement aufgeschoben wird, die beiden konischen Flächen noch weiter aufeinander geschoben werden und der Klemmmechanismus noch weiter befestigt wird.

Das Innenelement 17 besitzt an zwei einander diametral gegenüberliegenden Umfangsbereichen des Aussenkonus 22 jeweils einen Flügel 41, 42, dessen längsverlaufende Stirnfläche parallel zur Stockachse verläuft. Jeder Flügel 41,42 ist in einem entsprechend breiten Schlitz 43,44 des Spreizelementes 16 axial geführt. Auf diese Weise ist das Innenelement 17 bei seiner axialen Bewegung relativ zum Spreizelement 16 gegenüber diesem unverdrehbar. Die beiden Schlitze 43,44 sind im Wesentlichen über die Längserstreckung des Hauptkörpers 23 des Spreizelementes 16 vorgesehen, d. h. verlaufen nur unwesentlich in den Bereich des zylindrischen Ansatzes 38 hinein. Dies heisst mit anderen Worten auch, dass die grösste radiale Abmessung der diametral einander gegenüberliegenden Flügel 41 und 42 etwas grösser ist als der Innendurchmesser des zylindrischen Ansatzes 38.

Das Spreizelement 16 ist an seinem Aussenumfang mit vier jeweils achsensymmetrisch bzw. punktsymmetrisch zueinander angeordneten Einschnitten 40 versehen, die in Längsrichtung verlaufen und sich über nahezu die gesamte Länge des Hauptkörpers 23 des Spreizelementes 16 erstrecken. Dadurch ergeben sich definierte Umfangsklemmbereiche des Spreizelementes 16.

Um das Spreizelement 16 (wenn es nicht als erstes eingefädelt worden ist) nachträglich über die Verstellschraube 18 und das Innenelement 17 zu bringen besitzt das Spreizelement 16 einen axial durchgehenden Schlitz 44, an dem das Spreizelement 16 radial geöffnet und über das Innenelement 17 und die Verstellschraube 18 gebracht werden kann.

Bei der Bewegung zum Festklemmen des Innenrohrs 11 im Aussenrohr 12 mit Hilfe der Spreizvorrichtung 15 wird durch Drehen rechts (bei Linksgewinde) oder links (bei Rechtsgewinde) des Innenrohrs 11 und damit der Verstellschraube 18 gegenüber dem Aussenrohr 12 das Innenelement 17 vom Innenrohr 11 weg bewegt, wobei zunächst das Spreizelement 16 in dieselbe Richtung bis hin zum äusseren Anschlag 26 bewegt bzw. gedrückt wird. Danach wird das Spreizelement 16 bei weiterer axialer Bewegung des Innenelements 17 in radialer Richtung gespreizt, so dass sich der Aussenumfang des Spreizelements 16 an den Innenumfang des Aussenrohrs 12 unter Druck anlegt. In diesem Zustand besitzt das Spreizelement 16 einen bestimmten vorgegebenen geringen Abstand von der inneren Anschlagfläche 30. Erfolgt nun in diesem mit mehr oder weniger hohem Drehmoment festgeklemmten Zustand des Innenrohrs 11 im Aussenrohr 12 eine stossartige axiale Belastung ausgehend vom mit beispielsweise einem Griff versehenen Aussenrohr 12 zum mit einer Stockspitze versehenen Innenrohr 11 hin, kann sich aufgrund der klemmenden Festlegung des Spreizelementes 16 im Aussenrohr 12 das Innenelement 17 axial bewegen. Dies bedeutet, dass sich das Innenelement 17 weiter in den Innenkonus 27 des Spreizelements 16 bewegt, was zu einer weiteren Spreizung des Spreizelementes 16 und damit zu einer Erhöhung der Haltekraft zwischen Innenrohr 11 und Aussenrohr 12 führt.

Wird nun ein solcher Mechanismus vollständig gelöst, so kann es vorkommen, dass im eigentlichen Klemmbereich 36, wenn das Innenelement genügend weit zum Innenohr geschraubt wurde, überhaupt keine oder nur noch eine schwache Kontaktfläche zur Innenfläche des Aussenrohres zur Verfügung stellt. Versucht man dann, den Mechanismus durch Drehen des Innenrohres relativ zum Aussenrohr festzustellen, so dreht das Spreizelement mit weil es so leicht an der Innenfläche des Aussenrohres gleiten kann. Der Mechanismus kann dann nicht mehr festgestellt werden, dies kann durch die oben beschriebenen Klemmabschnitte 1 und deren oben beschriebene Wirkungsweise effektiv verhindert werden. Ein damit im Zusammenhang stehendes Problem ergibt sich, wenn das Innenelement zu weit zum Innenrohr, respektive zur dort angeordneten Anschlagsfläche 30 gedreht wird. Da das Innenelement über einen zylindrischen Abschnitt 20 verfügt, kann es dann vorkommen, dass die Fläche 24, die der Anschlagsfläche 30 zugewandt ist, mit dieser in flächigen Kontakt tritt. Die dabei auftretende Reibung kann anschliessend verhindern, dass der Mechanismus wieder festgestellt werden kann. Tatsächlich müssen ja Innenrohr 11 und Verstellschraube 18 gemeinsam drehen und Innenelement 17 und Spreizelement 16 sollten in der gleichen Rotationsposition und relativ zum Aussenrohr rotationsfest bleiben. Wird nun das Innenelement zu stark in flächige Anlage an die Anschlagsfläche 30 gedreht, so können auch die Klemmabschnitte 1 am Spreizelement 16 nicht mehr genügend Reibung zur Verfügung stellen, was dazu führt, dass bei einem Drehen des Innenrohres 11 dann der gesamte Mechanismus inklusive Innenelement und Spreizelement mit Drehen und eine Feststellung mehr möglich ist. Dies kann verhindert werden, indem, wie dies insbesondere anhand von Figur 5 ersichtlich ist, am Innenelement an der Anschlagsfläche 24 ein Vorsprung 25 angeordnet wird. Dieser verhindert, dass die Anschlagsfläche 24 in flächigen Kontakt mit der Anschlagsfläche 30 am Endstopfen kommt, wodurch eine solche zu starke Feststellung zwischen Innenelement und Endstopfen verhindert werden kann. Alternativ oder zusätzlich ist es möglich, auf der Fläche 30 des Endstopfens 19 einen Vorsprung 28 anzuordnen, der im wesentlichen die gleiche Funktion übernimmt.

Ganz besonders vorteilhaft ist es nun, wenn am Innenelement ein Vorsprung 25 angeordnet wird, und zwar in Form einer sich aufbauenden und in einer axialen Abschlussfläche 34 terminierenden Rampe, und indem am Endstopfen 19 korrespondierend dazu ebenfalls eine Rampe 28 mit einem axialen Abschnitt 35 zur Verfügung gestellt wird. Diese beiden Rampen 25 und 28 sind dabei relativ in Bezug auf ihre Steigung als auch in Bezug auf ihre Höhe so angeordnet, dass sie, wie sich dies insbesondere in der perspektivischen Ansicht gemäss Figur 6 c) erkennen lässt, in einen in Rotationsrichtung flächigen Anschlag bringen lassen. So kann überhaupt keine Kontaktierung mehr mit der Fläche 30 stattfinden und somit auch keine einem Feststellen des Mechanismus entgegenwirkende Reibung zwischen dem Endstopfen und dem Innenelement aufgebaut werden. Damit eine möglichst vorteilhafte Anordnung der Rampen 28 am Endstopfen möglich ist, wird vorteilhafter Weise bei der Verstellschraube im an den Endstopfen 19 angrenzenden Bereich ein verjüngter Bereich 29 ausgebildet, so dass die Rampen 28 möglichst breit ausgebildet werden können, und das beim reinschrauben der Verstellschraube eine gewisse Toleranz vorhanden ist.

**BEZUGSZEICHENLISTE**

| | | | |
|---|---|---|---|
| 1 | elastischer Klemmabschnitt | 26 | äusserer Anschlag, , Schraubenkopf |
| 2 | Kontaktfläche von 1 | | |
| 3 | axialer Begrenzungsschlitz in 38 für 1 | 27 | Innenkonus von Spreizhülse |
| | | 28 | Rampe auf dem Kragen des Endstopfens |
| 4 | Arm von 1 | | |
| 10 | längenverstellbares Rohr | 29 | verjüngter Bereich der Verstellschraube |
| 11 | Innenrohr | | |
| 12 | Aussenrohr | 30 | obere Fläche des Kragens des Endstopfes, unterer Anschlag für Spreizhülse |
| 13 | dem Aussenrohr zugewandtes Ende des Innenrohrs | | |
| 14 | Rohrmanschette | 31 | im Innenrohr liegender Abschnitt des Endstopfens |
| 15 | Spreizvorrichtung | | |
| 16 | Spreizhülse, Spreizelement | 32 | umlaufender Flansch |
| 17 | Innenelement, Klemmkeil | 34 | axiale Anschlagsfläche der Rampe auf dem Klemmkeil |
| 18 | Stange mit Aussengewindeabschnitt, Aussengewindestange, Verstellschraube | | |
| | | 35 | axiale Anschlagfläche der Rampe auf dem Kragen |
| | | 36 | Spreizbereich von 16 |
| 19 | Endstopfen | 37 | gewindefreie Durchgangsöffnung durch Spreizhülse |
| 20 | zylindrischer Abschnitt des Klemmkeils | | |
| 21 | axiale Gewindebohrung von Klemmkeil | 38 | zylindrische Schulter der Spreizhülse |
| 22 | Aussenkonus von Klemmkeil | 39 | axiale Vertiefung in Aussenfläche der Spreizhülse |
| 23 | spreizbarer Hauptkörper der Spreizhülse | | |
| | | 40 | axiale Rippe auf Aussenfläche der Spreizhülse |
| 24 | untere Anschlagfläche am Klemmkeil | | |
| | | 41 | Flügel |
| 25 | Rampe an der unteren Anschlagfläche des | 42 | Flügel im durchgehenden Schlitz |
| | Klemmkeils, Keil | 43 | Schlitz |
| 44 | durchgängiger Schlitz | | Spreizbereich von 16 |
| 45 | Boden von Schlitz 43 | r₂ | Aussenradius von elastischem Klemmabschnitt |
| A | Achse von 16 | | |
| r₁ | Aussenradius von Mantelfläche im | | |

## Patentansprüche

1. Längenverstellbares Rohr (10), insbesondere für Stöcke wie Skistöcke, Trekkingstöcke, Langlaufstöcke, Nordic-Walking Stöcke, mit zumindest einem Aussenrohr (12) und
einem zur Einstellung der Rohrlänge in das Aussenrohr (12) teleskopisch einschiebbaren Innenrohr (11)
und mit einer am Einschubende des Innenrohrs (11) gehaltenen Spreizvorrichtung (15), mit der das Innenrohr (11) im Aussenrohr (12) axial festklemmbar ist und die ein radial auseinanderdrückbares und mit einem Innenkonus (27) versehenes, Spreizelement (16) und ein mit einem gegenläufigen Aussenkonus (22) versehenes und im Spreizelement (16) axial verschiebbar aufgenommenes Innenelement (17) und eine axial gerichtete, am Innenrohr (11) drehfest gehaltene Verstellschraube (18), die mit einer Innengewindebohrung (21) im Innenelement (17) in Wirkverbindung ist, aufweist, wobei das Spreizelement (16) über eine gewindefreie Durchgangsöffnung (37) verfügt, durch welche die Verstellschraube (18) hindurchtritt,
**dadurch gekennzeichnet, dass**
am oder im Spreizelement (16) ein Klemmabschnitt (1) angeordnet ist, welcher in radialer Richtung wenigstens im Bereich einer Kontaktfläche (2) im entspannten Zustand über einen grösseren Radius (r₂) verfügt als der Radius (r₁) des Spreizelements (16) in dessen durch die Wechselwirkung mit dem Innenelement (17) verursachten Spreizbereich (36),
und dass der Klemmabschnitt (1) wenigstens im Bereich der Kontaktfläche (2) elastisch gegen eine Rückstellkraft zur Achse (A) hin wenigstens bis zum Radius (r₁) des Spreizelements (16) nach innen versetzbar oder verschiebbar ist, wobei das Spreizelement (16) in seinem dem Innenrohr (11) zugewandten axialen Bereich über einen zylindrischen Abschnitt (38) verfügt, der durch das Innenelement (17) nur wenig aufgespreizt oder sogar im Wesentlichen nicht aufgespreizt wird, und dass der Klemmabschnitt (1) in diesem zylindrischen Abschnitt (38) angeordnet ist, wobei der Klemmabschnitt (1) in Form wenigstens einer durch zwei axial verlaufende Schlitze (3) vom zylindrischen Abschnitt (38) abgetrennt ausgebildeten Lasche ausgestaltet ist, welche wenigstens einseitig über einen als elastisches Bindeglied zum zylindrischen Abschnitt (38) wirkenden Arm (4) mit dem zylindrischen Abschnitt (38) verbunden ist.

2. Längenverstellbares Rohr nach Anspruch 1, **dadurch gekennzeichnet, dass** der zylindrischen Abschnitt (38) über einen geringeren Aussendurchmesser verfügt als der auf der dem Aussenrohr (12) zugewandten Seite angeordnete Spreizbereich (36) des Spreizelements (16), in welchem das Spreizelement (16) durch das Innenelement (17) aufgespreizt wird.

3. Längenverstellbares Rohr nach Anspruch 3, **dadurch gekennzeichnet, dass** die Lasche ein freies, dem Innenohr (11) zugewandtes Ende aufweist, und in diesem Bereich vorzugsweise eine radial nach aussen gerichtete, vorzugsweise angepasst an die Innenfläche des Aussenrohres (12) konisch verlaufende Kontaktfläche zur Verfügung stellt.

4. Längenverstellbares Rohr nach einem der vorhergehenden Ansprüche, **dadurch gekennzeichnet, dass** am Spreizelement (16) wenigstens zwei Klemmabschnitte (1) angeordnet sind, vorzugsweise in gegenüberliegender Weise respektive bei mehr als zwei in gleichmässig um den Umfang verteilter Weise.

5. Längenverstellbares Rohr nach einem der vorhergehenden Ansprüche, **dadurch gekennzeichnet, dass** der grössere Radius (r₂) des Klemmabschnitts (1) wenigstens 1 %, vorzugsweise wenigstens 2 %, insbesondere bevorzugt im Bereich von 3-8 % grösser ist als der Radius (r₁) des Spreizelements (16) im entspannten Zustand.

6. Längenverstellbares Rohr nach einem der vorhergehenden Ansprüche, **dadurch gekennzeichnet, dass** der Klemmabschnitt (1) einstückig mit dem Spreizelement ausgebildet ist.

7. Längenverstellbares Rohr nach einem der vorhergehenden Ansprüche, **dadurch gekennzeichnet, dass** an der der Spreizvorrichtung (15) zugewandten Anschlagsfläche (30) des Innenrohres (11) und/oder am Innenelement (17) an deren dem Innenohr (11) zugewandten Anschlagsfläche (24) ein sich jeweils in axialer Richtung erstreckender Vorsprung (25, 28) angeordnet ist.

8. Längenverstellbares Rohr nach Anspruch 7, **dadurch gekennzeichnet, dass** der Vorsprung (25, 28) in Form einer sich in Umfangsrichtung sukzessive aufbauender Rampe (25, 28), die in einer axialen Anschlagsfläche (34, 35) endet, ausgebildet ist, und die eine axiale Höhe im Bereich von 0.1-3 mm, vorzugsweise im Bereich von 0.2-1 mm aufweist.

9. Längenverstellbares Rohr nach Anspruch 8, **dadurch gekennzeichnet, dass** sowohl am Innenrohr (11) als auch am Innenelement (17) solche Vorsprünge (25, 28) angeordnet sind, und dass diese derartig gegenläufig ausgebildet sind, dass die beiden axialen Anschlagsflächen (34, 35) bei einem herunterdrehen des Innenelements (17) zum Innenohr (11) in flächige Anschlagslage gebracht werden können.

10. Längenverstellbares Rohr nach einem der vorhergehenden Ansprüche, **dadurch gekennzeichnet, dass** der Innenkonus (27) des Spreizelementes (16) derart verläuft, dass er sich zum Innenrohr (11) hin öffnet, und dass das Spreizelement (16) zwischen einem inneren Anschlag (30) am Innenrohr (11) und einem äusseren Anschlag (26), vorzugsweise am freien Ende der Verstellschraube (18) in geringen Grenzen axial bewegbar gehalten ist, wobei dieses axiale Spiel vorzugsweise im Bereich von 0.1-5 mm, insbesondere vorzugsweise im Bereich von 0.25-2.5 mm liegt.

11. Längenverstellbares Rohr nach einem der vorhergehenden Ansprüche, **dadurch gekennzeichnet, dass** das Spreizelement (16) topfartig ausgebildet und der Topfboden von dem dem Innenrohr (11) abgewandten freien Endbereich der Verstellschraube (18) durch die gewindefreie Durchgangsöffnung (37) hindurch durchdrungen ist, wobei vorzugsweise der äussere Anschlag (26) von einer auf das freie Ende der Verstellschraube (18) nach dem Aufsetzen des Spreizelements (16) aufgesetzten und axial befestigten Kappe (26) oder einem dort angeordneten Schraubenkopf gebildet ist.

12. Längenverstellbares Rohr nach einem der vorhergehenden Ansprüche, **dadurch gekennzeichnet, dass** das Spreizelement (16) an einem Umfangsbereich mit einem über die gesamte axiale Länge verlaufenden Schlitz (44) versehen ist, sowie vorzugsweise zusätzlich mit einem umfangsmässig gegenüberliegenden im wesentlichen bis auf einen zylindrischen, dem Innenohr (11) zugewandten Abschnitt (38) des Spreizelement (16) durch dieses verlaufenden Schlitz (43) versehen ist, wobei bevorzugtermassen das mit dem Aussenkonus (22) versehene Innenelement (17) einen oder mehr radiale Flügel (41,42) aufweist, der bzw. die in axialen Schlitzen (43,44) des Spreizelementes (16) geführt sind.

13. Längenverstellbares Rohr nach einem der vorhergehenden Ansprüche, **dadurch gekennzeichnet, dass** die Spreizvorrichtung (15) einen die Verstellschraube (18) axial und drehfest aufnehmenden Stopfen (19) aufweist, der im Innenrohr (11) axial und drehfest, vorzugsweise bis auf einen umlaufenden Flansch (32) gehalten ist und der den inneren Anschlag (30) bildet.

14. Skistock, Trekkingstock, Langlaufstock, oder Nordic-Walking Stock mit einem längenverstellbaren Rohr nach einem der vorhergehenden Ansprüche, wobei gegebenenfalls auch mehr als nur ein Verstellbereich vorgesehen sein kann, und weitere Verstellbereiche entweder mit einer Spreizvorrichtung (15) gemäss einem der Ansprüche 1-13 realisiert sein können oder mit einer anderen, gegebenenfalls auch aussen liegenden Spreizvorrichtung, und wobei am obersten Aussenrohr ein Griff angeordnet ist und am untersten Innenohr eine Stockspitze.

## Claims

1. A length-adjustable tube (10), in particular for sticks such as ski poles, trekking poles, cross-country poles and Nordic walking poles, said length-adjustable tube having
at least one outer tube (12) and one inner tube (11) which is telescopically insertable into the outer tube (12) for adjusting the tube length, and having an expanding device (15) which is held at the insertion end of the inner tube (11) and by way of which the inner tube (11) is axially clampable in the outer tube (12) and which comprises
an expanding element (16), which can be pushed apart radially and is provided with a female cone (27), and
an inner element (17), which is provided with an opposing male cone (22) and is accommodated in an axially displaceable manner in the expanding element (16) and
an axially directed adjustment screw (18) which is held non-rotatably on the inner tube (11) and is in operative connection with an internally threaded bore (21) in the inner element (17),
wherein the expanding element (16) has a thread-free passage opening (37) through which the adjustment screw (18) passes,
**characterized in that**
a clamping portion (1) is arranged on or in the expanding element (16), which clamping portion (1), in the radial direction at least in the region of a contact surface (2), has a greater radius (r₂) in the relaxed state than the radius (r₁) of the expanding element (16) in its expanding region (36) which is brought about as a result of the interaction with the inner element (17),
and **in that** the clamping portion (1) can be offset or displaced inward at least in the region of the contact surface (2) in an elastic manner against a resetting force toward the axis (A) at least as far as up to the radius (r₁) of the expanding element (16), wherein in its axial region which faces the inner tube (11), the expanding element (16) has a cylindrical portion (38) which, in a preferred manner, is only expanded a little or is substantially not expanded by the inner element (17), and **in that** the clamping portion (1) is arranged in said cylindrical portion (38), wherein the clamping portion (1) is developed in the form of at least one tab which is realized by two axially extending slots (3) separate from the cylindrical portion (38) and which is connected at least on one side to the cylindrical portion (38) by means of an arm (4) which acts as an elastic link to the cylindrical portion (38).

2. The length-adjustable tube as claimed in claim 1, **characterized in that** the cylindrical portion (38) has a smaller outer diameter than the expanding region (36) of the expanding element (16) which is arranged on the side facing the outer tube (12), in which the expanding element (16) is expanded by the inner element (17).

3. The length-adjustable tube as claimed in claim 3, **characterized in that** the tab comprises a free end which faces the inner tube (11), and in said region preferably provides a conically extending contact surface which is directed radially outward and is preferably adapted to the inside surface of the outer tube (12).

4. The length-adjustable tube as claimed in one of the preceding claims, **characterized in that** at least two clamping portions (1) are arranged on the expanding element (16), preferably in an oppositely situated manner or rather in the case of more than two in a manner distributed equally around the circumference.

5. The length-adjustable tube as claimed in one of the preceding claims, **characterized in that** the greater radius (r₂) of the clamping portion (1) is at least 1%, preferably at least 2%, in a particularly preferred manner within the range of 3-8% greater than the radius (r₁) of the expanding element (16) in the relaxed state.

6. The length-adjustable tube as claimed in one of the preceding claims, **characterized in that** the clamping portion (1) is realized integrally with the expanding element.

7. The length-adjustable tube as claimed in one of the preceding claims, **characterized in that** a projection (25, 28), which extends in each case in the axial direction, is arranged on the stop surface (30) of the inner tube (11) which faces the expanding device (15) and/or on the inner element (17) on its stop surface (24) which faces the inner tube (11).

8. The length-adjustable tube as claimed in claim 7, **characterized in that** the projection (25, 28) is realized in the form of a ramp (25, 28), which is built up gradually in the circumferential direction and ends in an axial stop surface (34, 35), and which comprises an axial height within the range of 0.1-3 mm, preferably within the range of 0.2-1 mm.

9. The length-adjustable tube as claimed in claim 8, **characterized in that** such projections (25, 28) are arranged on both the inner tube (11) and the inner element (17), and **in that** they are realized working in opposite directions in such a manner that the two axial stop surfaces (34, 35), when turning down the inner element (17) with respect to the inner tube (11), can be moved into a wide-area abutment position.

10. The length-adjustable tube as claimed in one of the preceding claims, **characterized in that** the female cone (27) of the expanding element (16) extends in such a manner that it opens toward the inner tube (11), and **in that** the expanding element (16) is held so as to be movable axially within certain limits between an inner stop (30) on the inner tube (11) and an outer stop (26), preferably on the free end of the adjustment screw (18), wherein said axial play is preferably within the range of 0.1-5 mm, in particular preferably within the range of 0.25-2.5 mm.

11. The length-adjustable tube as claimed in one of the preceding claims, **characterized in that** the expanding element (16) is realized in a cup-like manner and the cup bottom is penetrated by the free end region of the adjustment screw (18), which is remote from the inner tube (11), through the thread-free passage opening (37), wherein the outer stop (26) is preferably formed by a cap (26) which is placed onto the free end of the adjustment screw (18) once the expanding element (16) has been placed in position and is fastened axially or by a screw head which is arranged there.

12. The length-adjustable tube as claimed in one of the preceding claims, **characterized in that** the expanding element (16) is provided in a circumferential region with a slot (44) which extends over the entire axial length, as well as preferably, in addition, with a slot (43) which is located on the opposite circumference and extends substantially up to a cylindrical portion (38) of the expanding element (16) which faces the inner tube (11) and extends through said expanding element, wherein in a preferred manner the inner element (17) which is provided with the male cone (22) comprises one or more radial wings (41, 42) which is or are guided in axial slots (43, 44) of the expanding element (16).

13. The length-adjustable tube as claimed in one of the preceding claims, **characterized in that** the expanding device (15) comprises a plug (19), which receives the adjustment screw (18) in an axial and non-rotatable manner, is held in the inner tube (11) in an axial and non-rotatable manner, preferably up to a circumferential flange (32), and which forms the inner stop (30).

14. A ski pole, trekking pole, cross-country pole or Nordic walking pole having a length-adjustable tube as claimed in one of the preceding claims, wherein, where applicable, it is also possible to provide more than only one adjustment range, and further adjustment ranges can be realized either with an expanding device (15) as claimed in one of claims 1-13 or with another expanding device which, where applicable, is also located outside, and wherein a handle is arranged on the topmost outer tube and a pole tip on the bottommost inner tube.

## Revendications

1. Tube réglable en longueur (10), en particulier pour des bâtons tels que des bâtons de ski, des bâtons de randonnée, des bâtons de ski de fond, des bâtons de marche nordique, comprenant au moins un tube extérieur (12) et
un tube intérieur (11) pouvant être enfoncé de manière télescopique dans le tube extérieur (12) pour ajuster la longueur du tube, et
comprenant un dispositif d'écartement (15) retenu à l'extrémité d'enfoncement du tube intérieur (11), avec lequel le tube intérieur (11) peut être serré fixement axialement dans le tube extérieur (12) et qui présente un élément d'écartement (16) pouvant être écarté radialement et pourvu d'un cône interne (27) et un élément interne (17) pourvu d'un cône externe orienté en sens inverse (22) et reçu de manière déplaçable axialement dans l'élément d'écartement (16) et une vis de réglage (18) orientée axialement, maintenue de manière solidaire en rotation sur le tube intérieur (11), qui est en liaison fonctionnelle avec un alésage fileté interne (21) dans l'élément interne (17), l'élément d'écartement (16) disposant d'une ouverture de passage sans filetage (37) à travers laquelle passe la vis de réglage (18),
**caractérisé en ce**
**qu'**une portion de serrage (1) est disposée sur ou dans l'élément d'écartement (16), laquelle, dans la direction radiale, au moins dans la région d'une surface de contact (2) dans l'état détendu, dispose d'un plus grand rayon (r₂) que le rayon (r₁) de l'élément d'écartement (16) dans sa région d'écartement (36) provoquée par l'interaction avec l'élément interne (17),
et en ce que la portion de serrage (1), au moins dans la région de la surface de contact (2), peut être décalée ou déplacée vers l'intérieur élastiquement à l'encontre d'une force de rappel vers l'axe (A) au moins jusqu'au rayon (r₁) de l'élément d'écartement (16), l'élément d'écartement (16), dans sa région axiale tournée vers le tube intérieur (11), disposant d'une portion cylindrique (38) qui est seulement légèrement écartée ou même n'est sensiblement pas écartée par l'élément interne (17) et en ce que la portion de serrage (1) est disposée dans cette portion cylindrique (38), la portion de serrage (1) étant configurée sous la forme d'au moins une patte réalisée de manière séparée de la portion cylindrique (38) par deux fentes s'étendant axialement (3), laquelle patte est connectée au moins d'un côté à la portion cylindrique (38) par le biais d'un bras (4) connecté à la portion cylindrique (38) en tant qu'organe de liaison élastique.

2. Tube réglable en longueur selon la revendication 1, **caractérisé en ce que** la portion cylindrique (38) présente un diamètre extérieur inférieur à celui de la région d'écartement (36) de l'élément d'écartement (16) disposé du côté tourné vers le tube extérieur (12), dans laquelle région l'élément d'écartement (16) est écarté par l'élément interne (17).

3. Tube réglable en longueur selon la revendication 3, **caractérisé en ce que** la patte présente une extrémité libre tournée vers le tube intérieur (11), et dans cette région, fournit de préférence une surface de contact orientée radialement vers l'extérieur, de préférence adaptée à la surface interne du tube extérieur (12) et s'étendant sous forme conique.

4. Tube réglable en longueur selon l'une quelconque des revendications précédentes, **caractérisé en ce qu'**au moins deux portions de serrage (1) sont disposées sur l'élément d'écartement (16), de préférence de manière respectivement opposée lorsque plus de deux sont réparties uniformément sur la périphérie.

5. Tube réglable en longueur selon l'une quelconque des revendications précédentes, **caractérisé en ce que** le plus grand rayon (r₂) de la portion de serrage (1) est supérieur d'au moins 1 %, de préférence d'au moins 2 %, en particulier de préférence dans une plage de 3 à 8 %, au rayon (r₁) de l'élément d'écartement (16) dans l'état détendu.

6. Tube réglable en longueur selon l'une quelconque des revendications précédentes, **caractérisé en ce que** la portion de serrage (1) est réalisée d'une seule pièce avec l'élément d'écartement.

7. Tube réglable en longueur selon l'une quelconque des revendications précédentes, **caractérisé en ce qu'**au niveau de la surface de butée (30) du tube intérieur (11) tournée vers le dispositif d'écartement (15) et/ou au niveau de l'élément interne (17) au niveau de sa surface de butée (24) tournée vers le tube intérieur (11) est disposée une saillie (25, 28) s'étendant à chaque fois dans la direction axiale.

8. Tube réglable en longueur selon la revendication 7, **caractérisé en ce que** la saillie (25, 28) est réalisée sous la forme d'une rampe (25, 28) augmentant successivement dans la direction périphérique, qui se termine par une surface de butée axiale (34, 35) et qui présente une hauteur axiale de l'ordre de 0,1-3 mm, de préférence de l'ordre de 0,2-1 mm.

9. Tube réglable en longueur selon la revendication 8, **caractérisé en ce que** de telles saillies (25, 28) sont disposées à la fois au niveau du tube intérieur (11) et au niveau de l'élément interne (17) et **en ce que** celles-ci sont réalisées en sens inverse de telle sorte que les deux surfaces de butée axiales (34, 35), lors d'une rotation vers le bas de l'élément interne (17) par rapport au tube intérieur (11), puissent être amenées dans une position de butée à plat.

10. Tube réglable en longueur selon l'une quelconque des revendications précédentes, **caractérisé en ce que** le cône interne (27) de l'élément d'écartement (16) s'étend de telle sorte qu'il s'ouvre vers le tube intérieur (11) et **en ce que** l'élément d'écartement (16) est retenu de manière déplaçable axialement dans de faibles limites entre une butée interne (30) sur le tube intérieur (11) et une butée extérieure (26), de préférence à l'extrémité libre de la vis de réglage (18), ce jeu axial étant de préférence situé dans une plage de 0,1-5 mm, en particulier de préférence dans une plage de 0,25-2,5 mm.

11. Tube réglable en longueur selon l'une quelconque des revendications précédentes, **caractérisé en ce que** l'élément d'écartement (16) est réalisé en forme de pot et le fond de pot est traversé par la région d'extrémité libre de la vis de réglage (18) opposée au tube intérieur (11) à travers l'ouverture de passage sans filetage (37), la butée extérieure (26) étant formée de préférence par un capuchon (26) fixé axialement et posé sur l'extrémité libre de la vis de réglage (18) après la pose de l'élément d'écartement (16), ou par une tête de vis disposée à cet endroit.

12. Tube réglable en longueur selon l'une quelconque des revendications précédentes, **caractérisé en ce que** l'élément d'écartement (16) est pourvu au niveau d'une région périphérique d'une fente (44) s'étendant sur toute la longueur axiale, et de préférence en outre d'une fente (43) s'étendant à travers celui-ci et opposée sur la périphérie, essentiellement à l'exception d'une portion cylindrique (38) de l'élément d'écartement (16) tournée vers le tube intérieur (11), de préférence l'élément interne (17) pourvu du cône externe (22) présentant une ou plusieurs ailes radiales (41, 42) qui sont guidées dans des fentes axiales (43, 44) de l'élément d'écartement (16).

13. Tube réglable en longueur selon l'une quelconque des revendications précédentes, **caractérisé en ce que** le dispositif d'écartement (15) présente un bouchon (19) recevant axialement et de manière solidaire en rotation la vis de réglage (18), lequel est retenu axialement et de manière solidaire en rotation dans le tube intérieur (11), de préférence à l'exception d'une bride périphérique (32), et lequel forme la butée interne (30).

14. Bâton de ski, de randonnée, de ski de fond ou de marche nordique, comprenant un tube réglable en longueur selon l'une quelconque des revendications précédentes, plus de seulement une région de réglage pouvant éventuellement être prévue, et d'autres régions de réglage pouvant être réalisées soit avec un dispositif d'écartement (15) selon l'une quelconque des revendications 1 à 13, soit avec un autre dispositif d'écartement éventuellement situé également à l'extérieur et une poignée étant disposée au niveau du tube extérieur supérieur et une pointe de bâton étant disposée au niveau du tube intérieur inférieur.
